# EUROPEAN PATENT APPLICATION

(11) **EP 4 814 926 A1**
(43) Date of publication of application: **30.09.2026**
(21) Application number: 26161323.6
(22) Date of filing: 27.02.2026
(51) Int. Cl.: G09B 7/02, G09B 7/08

(54) **INTERACTIVE LEARNING WITH DYNAMICALLY DESIGNED LEARNING BASED ON PERFORMANCE EVALUATION**

(30) Priority: 29.03.2025 IN 202521031192
(71) Applicant: Tata Consultancy Services Limited, Maharashtra (IN)
(72) Inventor: SANTHANAM, Sivakumar Kuppusamy, 600086 Chennai, Tamil Nadu (IN); SAMUEL, Antony, 682042 Kochi, Kerala (IN); SIVAN, Vishnu, 695581 Trivandrum, Kerala (IN); KUMARA, Likhith Prasanna, 600113 Chennai, Tamil Nadu (IN)
(74) Representative: Goddar, Heinz J.

(57) **Abstract**

Using human pose detection technology, a system and method disclosed herein tracks poses performed by a subject and compares them with expected poses in an educational game. As the subject performs these actions, they are presented with math-related tasks, improving both engagement and learning through active participation. The method generates random numbers and creates combinations, challenging subjects to make correct poses based on the onscreen instructions. The response of the subject is evaluated using a unique scoring model and dynamically toughness of the questions asked is varied based on the score. The response scoring model is based on nonlinear scoring where score is provided for speed, complexity, incorrectness and confidence of subject while responding to questions. Existing solutions that analyze response are focused on mere classification of confidence levels and are generic in classification approaches using ML models, which are computation heavy and limited to mere class based classification.

## Description

### CROSS-REFERENCE TO RELATED APPLICATIONS AND PRIORITY

The present application claims priority to Indian application no.. 202521031192, filed on March 29, 2025.

### TECHNICAL FIELD

The embodiments herein generally relate to the field of interactive learning systems and, more particularly, to a method and system for interactive learning for elementary grade with dynamically designed learning based on performance evaluation of a subject via a unique scoring model.

### BACKGROUND

Gamified learning has been explored to make learning interactive, interesting and ensuring subjects are actively involved in the activity. The interactive means includes touch based gestures based communications with learning systems. However, most of the work and systems available are developed considering general age category. Further, when it comes to young subjects, for example elementary grade children, automated gesture or pose recognition using known pose recognition models such as MediaPipe^{™} is challenging due to high possibility of false recognition. This is mainly due lack of cognitive ability and firmness of young subjects or kids in performing a specified gesture. Thus, addressing gesture recognition to incorporate into gamified learning and further identifying confidence in the response of these is a technical challenge and needs to be explored.

### SUMMARY

Embodiments of the present disclosure present technological improvements as solutions to one or more of the above-mentioned technical problems recognized by the inventors in conventional systems.

For example, in one embodiment, a method for interactive learning.is provided. The method includes querying a subject from among a plurality of subjects during a learning session, with a set of questions identified from a question bank based on an initial problem solving capability recorded for each subject among the plurality of subjects and a historical data populated for each subject.

Further, the method includes evaluating a response of the subject to each question among the set of questions in terms a response score by analyzing a pose formed by the subject using fingers. The pose is recognized in context to an acquired pose calibration data of a plurality of poses recorded for the subject, and correctness of the response is checked with reference to the recognized pose. The response score is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response.

The speed score computation applies exponential penalty for delay in response. The confidence score computation rewards with a quadratic scaling factor for increase in confidence. The complexity score computation is based on a complexity of the question based on type of a mathematical operation of a mathematical equation comprised in the question, size of the mathematical equation, depth of the mathematical equation. The incorrect score computation is based on a number of incorrect poses recorded during the response and the complexity of the question; and

Furthermore, the method includes evaluating the subject based on the response score to generate a next set of questions from the question bank, wherein if the response score is below a threshold the difficulty level of questions is reduced and if the response score is equal or above a threshold the difficulty level of questions is increased.

In another aspect, a system for interactive learning is provided. The system comprises a memory storing instructions; one or more Input/Output (I/O) interfaces; and one or more hardware processors coupled to the memory via the one or more I/O interfaces, wherein the one or more hardware processors are configured by the instructions to query a subject from among a plurality of subjects during a learning session, with a set of questions identified from a question bank based on an initial problem solving capability recorded for each subject among the plurality of subjects and a historical data populated for each subject.

Further, the one or more hardware processors are configured to evaluate a response of the subject to each question among the set of questions in terms a response score by analyzing a pose formed by the subject using fingers. The pose is recognized in context to an acquired pose calibration data of a plurality of poses recorded for the subject, and correctness of the response is checked with reference to the recognized pose. The response score is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response.

The speed score computation applies exponential penalty for delay in response. The confidence score computation rewards with a quadratic scaling factor for increase in confidence. The complexity score computation is based on a complexity of the question based on type of a mathematical operation of a mathematical equation comprised in the question, size of the mathematical equation, depth of the mathematical equation. The incorrect score computation is based on a number of incorrect poses recorded during the response and the complexity of the question; the one or more hardware processors are configured to and

Furthermore, the one or more hardware processors are configured to evaluate the subject based on the response score to generate a next set of questions from the question bank, wherein if the response score is below a threshold the difficulty level of questions is reduced and if the response score is equal or above a threshold the difficulty level of questions is increased.

In yet another aspect, there are provided one or more non-transitory machine-readable information storage mediums comprising one or more instructions, which when executed by one or more hardware processors causes a method for interactive learning.

For example, in one embodiment, a method for interactive learning.is provided. The method includes querying a subject from among a plurality of subjects during a learning session, with a set of questions identified from a question bank based on an initial problem solving capability recorded for each subject among the plurality of subjects and a historical data populated for each subject.

Further, the method includes evaluating a response of the subject to each question among the set of questions in terms a response score by analyzing a pose formed by the subject using fingers. The pose is recognized in context to an acquired pose calibration data of a plurality of poses recorded for the subject, and correctness of the response is checked with reference to the recognized pose. The response score is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response.

The speed score computation applies exponential penalty for delay in response. The confidence score computation rewards with a quadratic scaling factor for increase in confidence. The complexity score computation is based on a complexity of the question based on type of a mathematical operation of a mathematical equation comprised in the question, size of the mathematical equation, depth of the mathematical equation. The incorrect score computation is based on a number of incorrect poses recorded during the response and the complexity of the question; and

Furthermore, the method includes evaluating the subject based on the response score to generate a next set of questions from the question bank, wherein if the response score is below a threshold the difficulty level of questions is reduced and if the response score is equal or above a threshold the difficulty level of questions is increased.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for interactive learning for elementary grade with dynamically designed learning, based on performance evaluation of a subject via an unique scoring model, in accordance with some embodiments of the present disclosure.
FIG. 1B illustrates an architectural overview of the system of FIG. 1A, in accordance with some embodiments of the present disclosure.
FIG. 2 is a flow diagram illustrating a method for interactive learning for elementary grade with dynamically designed learning, based on performance evaluation of the subject via the unique scoring model, using the system depicted in FIGS. 1A and 1B, in accordance with some embodiments of the present disclosure.
FIGS. 3A and 3B are example illustrations of display screens during an interactive learning session, in accordance with some embodiments of the present disclosure.
FIGS. 4A through 4E depicts example gestures and calibration approach of the system for subject specific poses, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for interactive learning for elementary grade with dynamically designed learning based on performance evaluation of a subject via an unique scoring model.

With target audiences, mostly kids or elementary grade students, calibration of 'poses' or 'hand gestures' performed using fingers is critical. This is because, in case of gestures performed by kids who are in developmental stage of the growth, finding uniformity in the way fingers are held to perform the gestures or pose is challenging. Thus, system calibration is critical for pose recognition so that the performed pose is accurately read or understood by the system for every individual. With current solutions, there is strong possibility of a scenario where the subject or the kid answered correctly with intended gesture but because a pose estimation model was not trained for the specific kid, the model misclassified and reported the gesture or pose to be wrong pose. Further, accurate classifying an captured pose data during inferencing using a machine learning (ML) model, the inferencing stage pose data, and the large amount of training data utilized must be similar. However, acquiring training data for all variations present for a single pose, with subjects having different length and flexibility of their fingers is practically challenging. Thus, this is hurdle in generalization of a pose in subjects, when they are growing stage kids .

Thus, the method and system discloses a unique approach to accurately calibrate the system for subject specific pose variation, enabling accurate pose detection irrespective of variation.

Once calibrated, during an interactive learning session the system, via a Graphical User Interface (GUI) displays and educates each individual subject with a list of predefined poses mapping it with respective numerical numbers or a mathematical operator, which can then be used by the subject to respond to a question posed by the system. An initial pose detection step enables to identify the subject and map respective calibrated poses. The response of the subject to any question then is evaluated by interpreting the performed pose in context of respective calibration priori done for the subject.

Furthermore, the system evaluates the response using a unique response scoring model based on a plurality of parameters comprising a) a speed score for the response, b) a confidence score for the response based on firmness in the pose, c) a complexity score for the response based on complexity of the question to which the response is sought, and d) an incorrect score for incorrectness of the response. This scoring model is non-linear and uses exponential, quadratic types of relations to more appropriately capture various levels that are present in response of the subject in context of the confidence and speed of response, and complexity of the question.

Existing solutions that attempt to segregate response are more focused on mere classification of confidence levels using ML models and are generic in classification approaches. ML models make them computation heavy and very limited to mere class based classification of a response.

The scoring is further used to decide on the question, the type of question and complexity of the question during the interactive learning session.

With calibration approach discussed above as disclosed by the method herein, the computational load on training ML model for accurate pose detection is reduced.

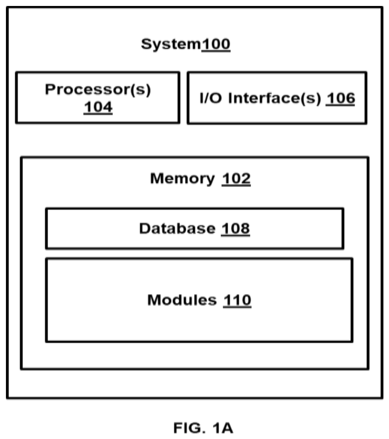

Referring now to the drawings, and more particularly to FIGS. 1A through 4E, where similar reference characters denote corresponding features consistently throughout the figures, there are preferred embodiments, and these embodiments are described in the context of the following exemplary system and/or method.

FIG. 1A is a functional block diagram of a system 100 for interactive learning for elementary grade with dynamically designed learning, based on performance evaluation of a subject via an unique scoring model, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

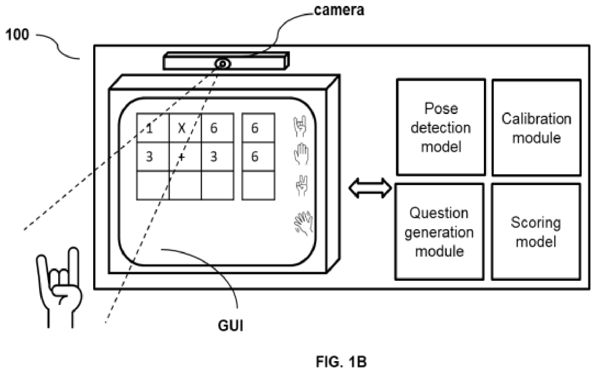

The I/O interface(s) 106 can include a variety of software and hardware interfaces, for example, a web interface, a graphical user interface (GUI) as in FIG. 1B, and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110, as shown in FIG. 1B, such as a pose detection model, a calibration module, a scoring model and a question generation module and the like.

The plurality of modules 110 include programs or coded instructions that supplement applications or functions performed by the system 100 for executing different steps involved in the process of interactive learning for elementary grade with dynamically designed learning, based on performance evaluation of a subject via the scoring model, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108, which stores a finger pose calibration data, which is pre-acquired for each subject among a plurality of subjects that are registered to attend learning session on the system 100. Alos various finger poses and the corresponding mathematical operator or a numerals mapped to the finger pose is also stored as a look up table in the database 108. The finger pose calibration data is defined by a plurality of finger-stretch-bend based parameters recorded for each subject based on capability of the subject to perform a displayed calibration pose. Furthermore, the database also can store a question bank and historical data populated for each subject.

The database (or repository) 108 may include a plurality of abstracted pieces of code for refinement and data that is processed, received, or generated as a result of the execution of the plurality of modules in the module(s) 110.

Although the database 108 is shown internal to the system 100, it will be noted that, in alternate embodiments, the database 108 can also be implemented externally to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to FIG. 1B through FIG. 4.

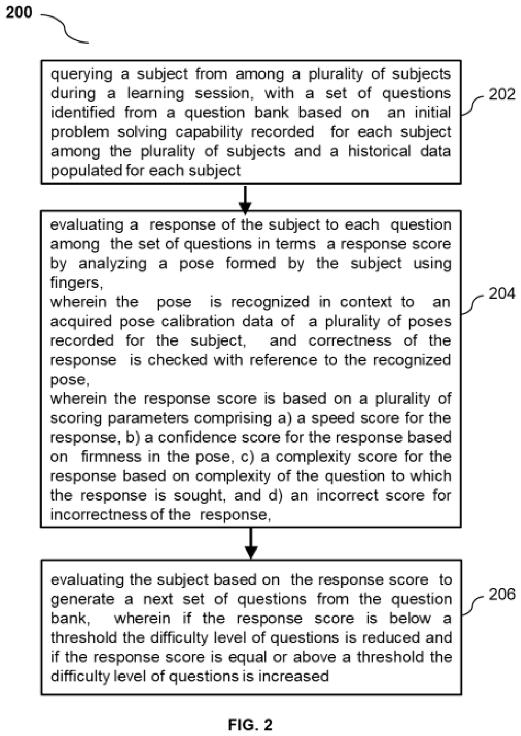

FIG. 1B illustrates an architectural overview of the system of FIG. 1A, in accordance with some embodiments of the present disclosure. FIG. 1B is better understood in context of steps explained in FIG. 2.

FIG. 2 is a flow diagram illustrating a method 200 for interactive learning for elementary grade with dynamically designed learning based on performance evaluation of a subject via an unique scoring model, using the system depicted in FIGS. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Referring to the steps of the method 200, at step 202 of the method 200, the one or more hardware processors 104 are configured by the instructions to query a subject from among a plurality of subjects during a learning session. The way the system is configured to question the subject is also referred to as gamified learning. The subject is queried with a set of questions identified from a question bank based on an initial problem solving capability recorded for each subject among the plurality of subjects and the historical data populated for each subject. This generation of set of questions is via the question generation module of FIG. 1B. The initial problem solving capacity can be derived based on prior conducted question and response sets by each subject. The questions are populated in the database 108. Further, based on the historical data of the subject (e.g., student) such as topics, the subject is good at, topics subject is not good and so on the set of questions are populated for the student.

The question comprises a mathematical equation and is required to be responded by forming a plurality of solutions using a combination of one or more of a plurality of mathematical operators (e.g., +, -,×,÷) and combination of a plurality numerals (e.g., 0,1,2 ...9) displayed to the subject on a Graphical User Interface (GUI).

If the subject is recorded to repeat usage of one or more mathematical operators, then in a successive iteration the frequently used mathematical operators are blocked from appearing, driving the subject to attempt new combinations of the mathematical operators and the plurality of numerals.

### Example implementation:

**Input:** Student starts the learning session (also referred interchangeably as game) with a start pose
**Output:** Questions are displayed on the screen, there are blank spaces in the equation for the student to answer

### Detailed process:

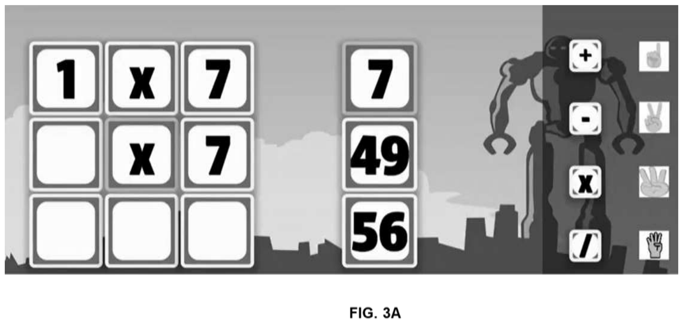

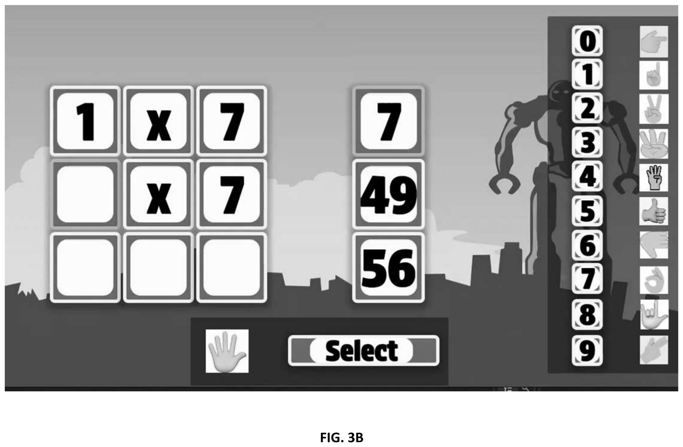

- A special pose is shown on the screen, and the student is required to perform that same pose to start the game
- The video feed of the student is taken and pose points are extracted using the AI Pose model
- Using the pose points and the calibration data, the specific angles and relative positions of the pose points are checked
- If all the conditions for that specific posture are satisfied, then the system passes the pose and triggers the action (Show questions) for that pose in the system.
- Questions are populated in the system; the system can look at the history of that student to check which topics he is good at and which topics he is not good at and then populate those specific type of questions.
- Questions have a difficulty rating based on the complexity and amount of thinking required to solve the problem.
- As depicted in example GUI of the system 100 in FIG. 3A and 3B, questions are in the form of filling in the blanks presented as a 3X3 grid, and there can be 10 different options if the field is numerical, 4 different options if the field is arithmetic sign and so on. Each of those options have corresponding postures displayed to be performed for selecting the option.

At step 204 of the method 200, the one or more hardware processors 104 are configured by the instructions to evaluate a response of the subject to each question among the set of questions via the scoring model as depicted in FIG. 1B. The response is computed in terms a response score by analyzing a pose formed the subject using fingers. A camera connected to the system 100via the I/O interface 106, as depicted in FIG. 1B, captures a video feed and records the pose. A set of pose points are extracted using a pose detection model ( as depicted in FIG. 1B), also referred to as Artificial Intelligence (AI) Pose Model, for example a pretrained pose points model like MediaPipe^{™}, and the pose points are stored for processing. For each of the poses there are a set predefined rules that needs to be passed to confirm if the student is performing that specific posture

Sample Rules for pose identification: If the hand is in upright orientation, thumb finger is open and other fingers are closed, then it will show identified as "thumbs up".

Posture identification while student answers questions
**Input:** Student performs a specific action to select the correct option for the question.
**Output:** The system recognizes the pose and makes note of the answer and then evaluates and gives real-time feedback whether the answer is correct.

### Detailed Process:

- Video feed of the student performing the postures for choosing the correct option
- Pose points are extracted using pose detection model (AI Pose Model), and the pose points (key points) are stored for processing
- For each of the poses there are predefined rules that needs to be passed to confirm if the student is performing that specific posture
- Sample Rules for postures:
   1. If the hand is in upright orientation, thumb finger is open and other fingers are closed, then it will show identified as "thumbs up".
   2. If the left arm key point is above the left shoulder key points, then the left hand is raised.
- The Postures rules as modified based on the calibration data, for example, if one of the students is not able to raise his left hand to the full extent then detection is accepted till he raises to his limit.
- Once the posture is identified, the system 100 triggers the action (Populate the answer) and the answer for that blank field (as depicted in FIG. 3A and 3B) is populated. For example as in question 2 of FIG. 3A, subject is expected to generate an expression to obtain result '49'. One expected answer is 7X7, while other combinations with different operators can be '40+9', '50-9', and 49/1 and so on.
- The marker moves to the next blank field and then the student is required to answer with a different posture from the group of options.
- All these values are recorded in the system - Postures related answer, the confidence with which the posture is performed, the time taken to perform that posture, if the student made incorrect attempts before performing the correct posture. These are used in the next step to evaluate the student.
- Based on the answers provided by the student, the answers are evaluated, and feedback is provided to say whether the student answered the question correctly.
- The next question is displayed based on the evaluation of the student.

The acquired pose is recognized in context to an acquired pose calibration data of a plurality of poses recorded for the subject. Further, the correctness of the response is checked with reference to recognized pose.

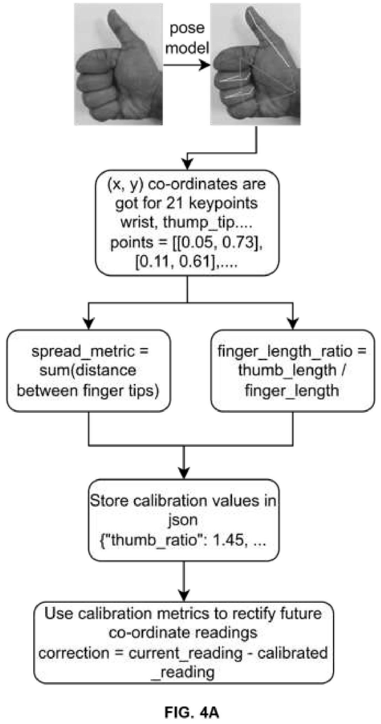

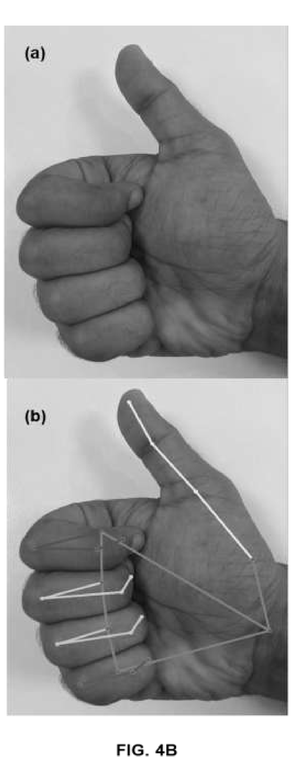

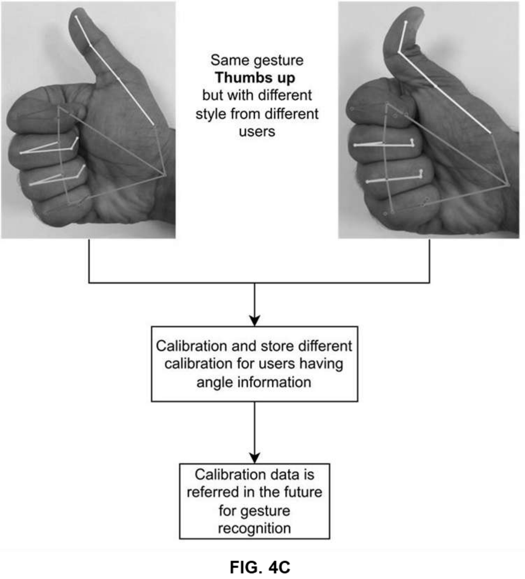

FIGS. 4A and 4B depict acquiring the pose calibration data using the calibration module of FIG. 1B, and is as explained below:

### Calibration of poses:

**Input:** Video feed of a student (the subject) performing predefined postures or poses.
**Output:** Pose calibration data, stored in database 108 for each subject

### Detailed process:

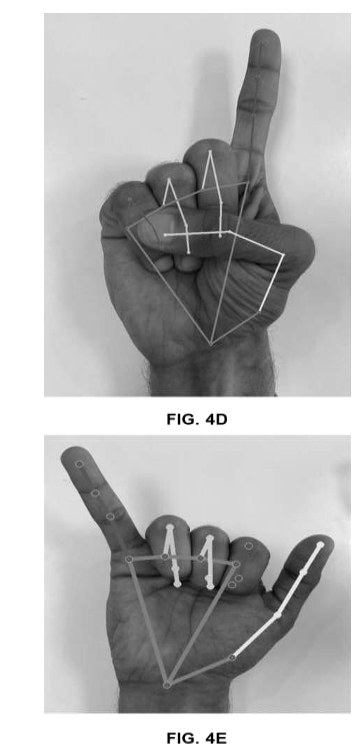

- Students (subjects) are asked to perform different stretching exercises for each body part like fingers , hands, legs etc.
- Required posture is shown on the screen and the student is asked to perform that posture.
- Thus, as depicted in FIG. 4A, and referring to image (a) of FIG. 4B, the student (subject) performs the reference gesture. Some sample gestures with pose points (key points) identified by the pose detection model are depicted in FIG. 4D and 4E
- Maximum angle student can stretch is calculated by: $θ = {cos}^{- 1} \left(\frac{\vec{AB} . \vec{BC}}{\left|\vec{AB}\right| \left|\vec{BC}\right|}\right)$ Where, $\vec{AB} = \left({x}_{2}-{x}_{1},{y}_{2}-{y}_{1}\right)$ $\vec{BC} = \left({x}_{3}-{x}_{2},{y}_{3}-{y}_{2}\right)$ *X* and *y* are the coordinates of pose model outputs.
- Distance between key points is calculated for Hand Raising, Leg Stretching etc. ${D}_{AB} = \sqrt{{\left({x}_{2}-{x}_{1}\right)}^{2} + {\left({y}_{2}-{y}_{1}\right)}^{2} + {\left({Z}_{2}-{Z}_{1}\right)}^{2}}$
- Thus, as depicted in FIG. 4A, and referring to image (b) in FIG. 4B, pose points are extracted using the pose detection model and values are stored.
- Listed below are the key point labels detected by the pose detection model run on an image of a hand gesture (pose performed by the subject):

   ```
labels = [
           "wrist",
           "thumb_cmc", "thumb_mcp", "thumb_ip", "thumb_tip",
           "index_finger_mcp", "index_finger_pip", "index_finger_dip",
           "index_finger_tip",
           "middle_finger_mcp", "middle_finger_pip", "middle_finger_dip",
           "middle_finger_tip",
           "ring_finger_mcp", "ring_finger_pip", "ring_finger_dip",
           "ring_finger_tip",
           "pinky_mcp", "pinky_pip", "pinky_dip", "pinky_tip"
           ]
```

- Keypoints having x, y co-ordinates from the image:

   ```
           Keypoints = [[0.05026590824127197, 0.7310702204704285],
           [0.11594259738922119, 0.616278886795044], [0.340687096118927,
           0.5082919597625732], [0.4875180125236511,
           0.4308810234069824], [0.46029728651046753,
           0.3637649714946747], [0.5363268852233887,
           0.5457893013954163], [0.6765841245651245,
           0.5585570335388184], [0.5026313662528992,
           0.5748506784439087], [0.457891583442688, 0.5716195702552795],
           [0.5492570996284485, 0.634959876537323], [0.6641596555709839,
           0.6409898400306702], [0.4326830208301544,
           0.6416571140289307], [0.43665647506713867,
           0.6293755769729614], [0.537243127822876, 0.7171646356582642],
           [0.6152859926223755, 0.7235754728317261],
           [0.4018239974975586, 0.712217390537262],
           [0.39984020590782166, 0.6990646123886108],
           [0.5139762163162231, 0.7923668622970581],
           [0.5431534051895142, 0.7956756949424744],
           [0.3936197757720947, 0.7754548192024231],
           [0.3750571608543396, 0.7628493309020996]]
```

- Computing proportional ratios and spread metrics
   1. Proportion ratio is calculated by dividing length of thumb with other finger.

      ```
thumb_length = calculate_distance(wrist, thumb_tip)
           finger_lengths = [calculate_distance(wrist, tip) for tip in finger_tips]
           # Calculate proportional ratios
           thumb_ratio = thumb_length / (np.mean(finger_lengths) + 1e-8)
           Spread metrics is calculated by finding the distance between the finger
           tips
           spread_metrics = [calculate_distance(finger_tips[i], finger_tips[j])
           for i in range(len(finger_tips))
           for j in range(i+1, len(finger_tips))]
           Calibration_data = {'thumb_ratio': {'mean': 1.4537931658952972, 'std':
           0.21806897488429458},
           'finger_spread': {'mean': 0.11737133567533835, 'std':
           0.05272171453400393}}
```
   2. Stores mean values with ±15% variance as initial thresholds
   3. The above calibration file is stored as a JSON^{™} configuration to be used for detection gestures for this specific student.
   4. Subsequent recognitions use relative comparisons to stored ratios

      ```
thumb_z = (current['thumb_ratio']['mean'] -
           calibration['thumb_ratio']['mean']) / calibration['thumb_ratio']['std']
```

- Now after calibration the current reading is rectified according to the calibrated data to consider for the differences in the hands of the developing children.
- Using the pose points, student finger-stretch-bend based parameters are stored such as max thumb bending, hand raising etc.
- These student specific finger-stretch-bend based parameters are stored and used in the next steps when the pose needs to be identified when student answers or responds to the question via a pose generated using fingers.

The pose calibration data is critical as the way each student does a posture or pose is different. For example, as depicted in FIG, 4C, the way one student gives a thumbs-up might not be same way other students do.

The response score to evaluate the subject is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response.

Speed Score (S_{speed}): The speed score computation applies exponential penalty for delay in response. Instead of a linear time score, an exponential penalty is used. For example, the time score can be penalized exponentially for times over 6 seconds: ${S}_{spect} = \left\{\begin{matrix}10 & if T \leq 3 \\ 8 & if 3 < T \leq 6 \\ 8 \times exp \left(\frac{T - 6}{2}\right) & if T > 6\end{matrix}\right.$

This way, the score decreases exponentially as the time increases beyond 6 seconds.

The confidence score (S_{confidence}): This computation rewards the subject/student with a quadratic scaling factor for increase in confidence. Confidence is decided based on firmness and consistency of the pose. The pose of the student is tracked in real time, and the pose is taken into consideration only if the student holds a specific pose for a specific time (Example 10 seconds). If the student changes the pose before that time, then counting how many pose changes are performed is taken into consideration. This is inverse quadratic related to the confidence score. More pose changes corresponds to less confidence and less firmness. ${S}_{confidence} = {C}^{2} \times 10$

This scales confidence quadratically, where C is the confidence between 0 and 1.

The complexity score (S_{complexity}): This computation is based on the complexity of the question based on type of a mathematical operation of a mathematical equation comprised in the question, size of the mathematical equation, depth of the mathematical equation. The equation complexity factor can be scaled using an exponential function of the depth D to make deeper equations much harder and thus reward them more: ${S}_{complexity} = \left(E\times 5\right) \times {\left(1+D\right)}^{2}$

This means:
o For simple equations, the complexity will be moderate.
o For deep, complex equations, the complexity will be scaled heavily by D², rewarding more complex equations significantly.

The incorrect score (S_{incorrect}): This computation is based on a number of incorrect poses recorded during the response and the complexity of the question. The penalty for incorrect gestures can depend on both the number of mistakes and the complexity of the equation: ${S}_{incorrect} = - I \times \left(2+E\right)$ Here, I is the number of incorrect poses (gestures), and E is the complexity of the equation (1 for simple, 2 for intermediate, 3 for complex).

The final score, i.e. the response score is: $S = {S}_{spect} + {S}_{confidence} + {S}_{incorrect} + {S}_{complexity}$

At step 206 of the method 200, the one or more hardware processors 104 are configured by the instructions to evaluate the subject based on the response score to generate a next set of questions from the question bank. If the response score is below a threshold the difficulty level of questions is reduced and if the response score is equal or above a threshold the difficulty level of questions is increased. If response score for one or more of the plurality of scoring parameters is increasing with every question in the learning session the subject is identified to have improvement in learning capability.

Evaluating the student based on how they answer the questions
Input: Student performs a specific action to select the correct option for the question. Different parameters are recorded like speed of answering, confidence of pose, incorrect pose before coming to the correct answer
Output: Evaluation of the response score of the student for the topics covered

Detailed Process:
- First, parse the given mathematical expression (LHS) into a tree-like structure, where each operation is as node, and its operation is a node, and its operands are child nodes.
- Categories Operations Based on Type and Operand Size.
- Next, identify the type of operation and size of operation
- **Simple Operations:** Addition, Subtraction and small multiplications are considered Ease.
   **Intermediate Operations:** Operations involving large operands or subtraction involving negative numbers are classified as Medium.
   Complex Operations: Multiplication, division or nested operations involving large numbers, fractions or negative numbers are classified as Complex
- **Determine the Depth of Operations** D: The depth of an equation refers to how many layers of operations there are. For example:
   -> "4 + 4" (depth = 1)
   -> "4 + (4 * 2)" (depth = 2)
   -> "((4 + 4) * (5 - 3)) + 7" (depth = 3)

Choosing the next question based on the history of response score:
**Input:** History of evaluation score - The number of questions the student was able to answer correctly and with how much confidence.
**Output:** The next question to be displayed to the user, Easier question if the student is weak, tougher questions if the student is strong and wants to improve his understanding further.

### Detailed Process:

- Score analysis is done with respect to each scoring factor
- If student tries to make equations only using a simple operator like '+' each time, in the next iteration system 100 removes the frequently used operator '+' for answering. For example as in question 2 of FIG. 3A, subject is expected to generate an expression to obtain result '49'. Id subject seems to choose '+' and '-' operators, in next iteration only 'X' multiplication and '/' division can be displayed forcing the subject to generate the expression with limited specific operators.
- Students should use other operators for solving the equation and this makes it tougher for the student.

In an embodiment, a Group evaluation can be performed for the whole class of students when they answers the questions with poses. An example approach implemented by the system 100 is explained below:
**Input:** capture video feed of the whole classroom of students standing up and performing posture/poses for answering the questions.
**Output:** Identify the number of students who have understood the concepts and answering questions rather than just copying postures from their Neighbors.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an applicationspecific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for interactive learning comprising:
querying (202), via one or more hardware processors, a subject from among a plurality of subjects during a learning session, with a set of questions identified from a question bank based on an initial problem-solving capability recorded for each subject among the plurality of subjects and a historical data populated for each subject;
evaluating (202), via the one or more hardware processors, a response of the subject to each question among the set of questions in terms a response score by analyzing a pose formed by the subject using fingers,
wherein the pose is recognized in context to an acquired pose calibration data of a plurality of poses recorded for the subject, and correctness of the response is checked with reference to the recognized pose,
wherein the response score is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response, and wherein,
the speed score computation applies exponential penalty for delay in response,
the confidence score computation rewards with a quadratic scaling factor for increase in confidence,
the complexity score computation is based on a complexity of the question based on type of a mathematical operation of a mathematical equation comprised in the question, size of the mathematical equation, depth of the mathematical equation, and
the incorrect score computation is based on a number of incorrect poses recorded during the response and the complexity of the question; and
evaluating (206), via the one or more hardware processors, the subject based on the response score to generate a next set of questions from the question bank, wherein if the response score is below a threshold the difficulty level of questions is reduced and if the response score is equal or above a threshold the difficulty level of questions is increased.

2. The processor implemented method as claimed in claim 1, wherein if response score for one or more of the plurality of scoring parameters is increasing with every question in the learning session the subject is identified to have improvement in learning capability.

3. The processor implemented method as claimed in claim 1, wherein the pose calibration data is pre-acquired for each subject among the plurality of subjects, and is defined by a plurality of finger-stretch-bend based parameters recorded for each subject based on capability of the subject to perform a displayed calibration pose.

4. The processor implemented method as claimed in claim 1,
wherein the question comprising the mathematical equation is required to be responded by forming a plurality of solutions using a combination of one or more of a plurality of mathematical operators and combination of a plurality numerals displayed to the subject on a Graphical User Interface (GUI),
wherein if the subject is recorded to repeat usage of one or more mathematical operators, then in a successive iteration the frequently used mathematical operators are blocked from appearing, driving the subject to attempt new combinations of the mathematical operators and the plurality of numerals.

5. The processor implemented method as claimed in claim 1, wherein the plurality of subjects falls into elementary school age category.

6. A system (100) for interactive learning , the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
query a subject from among a plurality of subjects during a learning session, with a set of questions identified from a question bank based on an initial problem-solving capability recorded for each subject among the plurality of subjects and a historical data populated for each subject;
evaluate a response of the subject to each question among the set of questions in terms a response score by analyzing a pose formed by the subject using fingers,
wherein the pose is recognized in context to an acquired pose calibration data of a plurality of poses recorded for the subject, and correctness of the response is checked with reference to the recognized pose,
wherein the response score is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response, and wherein,
the speed score computation applies exponential penalty for delay in response,
the confidence score computation rewards with a quadratic scaling factor for increase in confidence,
the complexity score computation is based on a complexity of the question based on type of a mathematical operation of a mathematical equation comprised in the question, size of the mathematical equation, depth of the mathematical equation, and
the incorrect score computation is based on a number of incorrect poses recorded during the response and the complexity of the question; and
evaluate the subject based on the response score to generate a next set of questions from the question bank, wherein if the response score is below a threshold the difficulty level of questions is reduced and if the response score is equal or above a threshold the difficulty level of questions is increased.

7. The system as claimed in claim 6, wherein if response score for one or more of the plurality of scoring parameters is increasing with every question in the learning session the subject is identified to have improvement in learning capability.

8. The system as claimed in claim 6, wherein the one or more hardware processors are configured to pre-acquire the pose calibration data for each subject among the plurality of subjects, and is defined by a plurality of finger-stretch-bend based parameters recorded for each subject based on capability of the subject to perform a displayed calibration pose.

9. The system as claimed in claim 6,
wherein the question comprising the mathematical equation is required to be responded by forming a plurality of solutions using a combination of one or more of a plurality of mathematical operators and combination of a plurality numerals displayed to the subject on a Graphical User Interface (GUI), and
wherein if the subject is recorded to repeat usage of one or more mathematical operators, then in a successive iteration the frequently used mathematical operators are blocked from appearing, driving the subject to attempt new combinations of the mathematical operators and the plurality of numerals.

10. The system as claimed in claim 6, wherein the plurality of subjects falls into elementary school age category.

11. One or more non-transitory machine-readable information storage mediums comprising one or more instructions which when executed by one or more hardware processors cause:
querying, a subject from among a plurality of subjects during a learning session, with a set of questions identified from a question bank based on an initial problem-solving capability recorded for each subject among the plurality of subjects and a historical data populated for each subject;
evaluating, a response of the subject to each question among the set of questions in terms a response score by analyzing a pose formed by the subject using fingers,
wherein the pose is recognized in context to an acquired pose calibration data of a plurality of poses recorded for the subject, and correctness of the response is checked with reference to the recognized pose,
wherein the response score is based on a plurality of scoring parameters comprising a) a speed score for the response, b) a confidence score for the response based on firmness in the pose, c) a complexity score for the response based on complexity of the question to which the response is sought, and d) an incorrect score for incorrectness of the response, and wherein,
the speed score computation applies exponential penalty for delay in response,
the confidence score computation rewards with a quadratic scaling factor for increase in confidence,
the complexity score computation is based on a complexity of the question based on type of a mathematical operation of a mathematical equation comprised in the question, size of the mathematical equation, depth of the mathematical equation, and
the incorrect score computation is based on a number of incorrect poses recorded during the response and the complexity of the question; and
evaluating, the subject based on the response score to generate a next set of questions from the question bank, wherein if the response score is below a threshold the difficulty level of questions is reduced and if the response score is equal or above a threshold the difficulty level of questions is increased.

12. The one or more non-transitory machine-readable information storage mediums as claimed in claim 11, wherein if response score for one or more of the plurality of scoring parameters is increasing with every question in the learning session the subject is identified to have improvement in learning capability.

13. The one or more non-transitory machine-readable information storage mediums as claimed in claim 11, wherein the pose calibration data is pre-acquired for each subject among the plurality of subjects, and is defined by a plurality of finger-stretch-bend based parameters recorded for each subject based on capability of the subject to perform a displayed calibration pose.

14. The one or more non-transitory machine-readable information storage mediums of claim 11,
wherein the question comprising the mathematical equation is required to be responded by forming a plurality of solutions using a combination of one or more of a plurality of mathematical operators and combination of a plurality numerals displayed to the subject on a Graphical User Interface (GUI),
wherein if the subject is recorded to repeat usage of one or more mathematical operators, then in a successive iteration the frequently used mathematical operators are blocked from appearing, driving the subject to attempt new combinations of the mathematical operators and the plurality of numerals.

15. The one or more non-transitory machine-readable information storage mediums of claim 11, wherein the plurality of subjects falls into elementary school age category.
